# EUROPEAN PATENT APPLICATION

(11) **EP 4 407 842 A1**
(43) Date of publication of application: **31.07.2024**
(21) Application number: 23217430.0
(22) Date of filing: 18.12.2023
(51) Int. Cl.: H02K 3/04, H02K 15/12, H02K 3/26

(54) **A METHOD OF INSULATING CONDUCTORS IN AN ELECTRIC MACHINE**

(30) Priority: 11.01.2023 US 202318095580
(71) Applicant: General Electric Company, Schenectady, NY 12345 (US)
(72) Inventor: ZHANG, Wei, 12345 Schenectady (US); OSAMA, Mohamed, 12345 Schenectady (US); HASHEMI FARZANEH, Helena, 12345 Schenectady (US); MAHONEY, Phillip, 12345 Schenectady (US)
(74) Representative: Openshaw & Co.

(57) **Abstract**

A method (300) of electrically insulating a conductive component (156, 256) for an electric machine (52, 110). The method (300) includes applying (306) a first dielectric, by dispersion coating, to the conductive component (156, 256) to define a first dielectric coating (160, 260). The method (300) also includes applying (310) a second dielectric, by electrostatic coating, to define a second dielectric coating (162, 262). The first dielectric coating (160, 260) and the second dielectric coating (162, 262) can then be cured (312).

## Description

### TECHNICAL FIELD

The subject matter disclosed herein relates to a method of insulating a conductive component for an electric machine, more specifically, a method of insulating a conductive component for an electric machine that forms a dielectric coating.

### BACKGROUND

Electric machines can be used to convert mechanical energy into electrical energy (e.g., generators) or convert electrical energy into mechanical energy (e.g., motors). Electric machines can be both generators and motors, such as when the electric machines are capable of converting mechanical energy into electrical energy and converting electrical energy into mechanical energy (e.g., starter/generators or motor/generators).

Electric machines typically include a plurality of conductive components. The conductive components can be bound together (e.g., a winding) and routed along a path throughout the electric machine, resulting in a plurality of windings disposed circumferentially within the electric machine. The conductive components or a subset of the conductive components can experience high temperatures in operation. The high temperatures experienced by the conductive components can be a result of the environment in which the electric machine is located and/or due to an increase in thermal energy resulting from the flow of current through the conductive components.

### BRIEF DESCRIPTION OF THE DRAWINGS

A full and enabling disclosure, including the best mode thereof, directed to one of ordinary skill in the art, is set forth in the specification, which refers to the appended figures in which:
FIG. 1 is a schematic cross-section view of a turbine engine that includes an electric machine, according to aspects of the present disclosure.
FIG. 2 is a cut-away view of the electric machine of FIG. 1, in accordance with aspects of the present disclosure.
FIG. 3A is a schematic illustration of a conductive component of the electric machine of FIG. 1 in an elongated state, in accordance with aspects of the present disclosure.
FIG. 3B is a schematic illustration of the conductive component of FIG. 3A in a relaxed state, in accordance with aspects of the present disclosure.
FIG. 4 is a schematic cross-section view of the conductive component of FIG. 3B, in accordance with aspects of the present disclosure.
FIG. 5 is a variation of the schematic cross-section view of the conductive component of FIG. 4 in accordance with aspects of the present disclosure.
FIG. 6 is a flow chart illustrating a method of electrically insulating the conductive component of FIG. 3A and FIG. 3B, in accordance with aspects of the present disclosure.

### DETAILED DESCRIPTION

One or more aspects of the disclosure relate to a method of electrically insulating a conductive component for an electric machine. A dispersion coating that includes a first dielectric material can be applied to the conductive component which forms a first dielectric coating. The dispersion can be a liquid dispersion where the conductive component is dipped, painted, or otherwise brought into contact with the first dielectric material in a liquid form. Benefits of a liquid dispersion include application of a more conformal coating per layer when compared to other processes such as powder coating. Additional benefits of the liquid dispersion, when the conductive component is additively manufactured, can include sealing surface pores or smoothing a rough exterior surface.

After the first dielectric coating is formed, an electrostatic coating of a second dielectric material is applied to the conductive component to form a second dielectric coating. The electrostatic coating or powder coating further reduces surface contours such as recesses or protrusions that persist after the dispersion coating.

Using both the dispersion coating and the electrostatic coating results in an insulation with an outside surface that is a smoother, higher quality than the insulation provided by dispersion coating or electrostatic coating alone. The dispersion coating, due to its viscosity, conforms to and seals surface pores or surface irregularities of the conductive component. The electrostatic coating, when applied to the dispersion coating, further smooths any surface irregularities.

The first dielectric coating and the second dielectric coating are then cured. After curing, the conductive component, the first dielectric coating, and the second dielectric coating define an insulated conductive component.

Another benefit can be effective application of insulation to pre-formed complex shape conductive components, such as an additively manufactured conductive components. Additive manufacturing allows for much more complex geometries, such as changing cross-section or curvature of the conductive component or copper coil. These complex geometries can improve the power density of the electric machine. However, such geometries can be challenging to coat using traditional methods. Inconsistency in thickness of the insulation, rough surfaces of the insulation, and portions of the complex geometry of the component that are difficult to access via electrostatic coating, are some of the challenges which can be encountered with traditional coating methods.

The two-step insulation process that includes the dispersion coating and the electrostatic coating provide high-quality insulation to conductive components with complex geometries. The dispersion coating provides contact between the first dielectric material and the various geometries of the conductive component, while applying a conformal coating. This is followed by the minimal application of an electrostatic coating which can smooth the surface of the insulation and be used to achieve the desired thickness at each portion of the insulation of the conductive component.

As used herein, the term "conformal coating" is a coating that can conform to a surface, wherein the conformal coating is smoother or provides a less irregular surface than the surface to which it is applied. That is, a conformal coating can fill pores, gaps, or recess in the surface to which it is applied as well as wrap around or otherwise receive protrusions from the surface to which it is applied.

Aspects of the drawings are not scaled and elements are often exaggerated to ease description and explanation.

As used herein, the terms "first", "second", and "third" can be used interchangeably to distinguish one component from another and are not intended to signify location or importance of the individual components.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

As used herein, the term "conductive component" refers to an object made, at least in part, from a material that contains movable electric charges. That is, conductive component can allow the flow of charge through the component, where the charge can flow in multiple directions.

The conductive component can include a metal or a metal alloy having high electrical conductivity (for example, higher than 3.4 x 107 siemens/meter). By way of non-limiting example, the conductive component can include any one or more of copper, silver, gold, aluminum, nickel, platinum, zinc, steel, lead, brass, carbon nanotubes, graphene, tungsten, tin, alloys thereof, and combinations thereof.

As used herein, the term "additive manufacturing" generally refers to manufacturing processes wherein a feedstock of material in a particulate powder or wire form aggregates to form a three-dimensional component. The feedstock material is then fused though the application of heat or other curing processes to form a monolithic unitary component, which can have a variety of integral sub-components. Monolithic, as used herein, refers to a unitary structure lacking interfaces or joints by virtue of the materials of each layer fusing to or melting with the materials of adjacent layers such that the individual layers lose their identity in the final unitary structure.

Suitable additive manufacturing techniques in accordance with the present disclosure include, for example, Directed Energy Deposition (DED), Fused Deposition Modeling (FDM), Selective Laser Sintering (SLS), 3D printing such as by inkjets and lasejets, Sterolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), Selective Laser Melting (SLM), Direct Metal Laser Melting (DMLM), and other known processes.

The Digital Light Processing (DLP) can include a 3D DLP printer having a transparent vat or transparent tank, a building platform, and a light assembly. The transparent vat or transparent tank can contain, for example, a photopolymer resin.

The DLP building platform can couple to, for example, a motor or other mechanisms permitting the movement of the building platform in one or more dimensions, such as raising or lowering the building platform from or toward the resin in the vat or tank.

A DLP printed component can couple to a lower portion of the building platform facing the vat or tank. The lighting assembly is located, at least in part, below the vat or tank. The lighting assembly can include at least one light source and at least one optical reflector or refractor such as, for example, a deflection mirror or at least one lens.

A controller coupled to or included in the DLP printer can control one or more aspects of the DLP printer such as, for example, the position of the DLP building platform or the intensity, duration, or orientation of the lighting source.

In addition to using a direct metal laser sintering (DMLS), a direct metal laser melting (DMLM) process, or an electron beam melting (EBM) process, where an energy source is used to selectively sinter or melt portions of a layer of powder, it should be appreciated that according to alternative aspects of the present disclosure, the additive manufacturing process can be a "binder jetting" process. In this regard, binder jetting involves successively depositing layers of additive powder in a similar manner as described above. However, instead of using an energy source to generate an energy beam to selectively melt or fuse the additive powders, binder jetting involves selectively depositing a liquid binding agent onto each layer of powder. The liquid binding agent can be, for example, a photo-curable polymer or another liquid bonding agent. Other suitable additive manufacturing methods and variants are intended to be within the scope of the present subject matter.

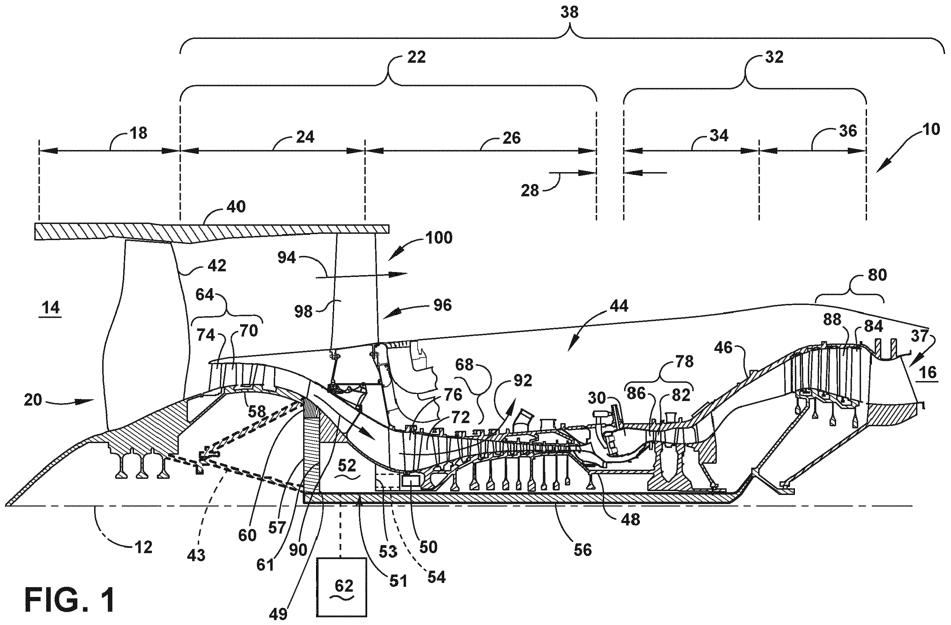

FIG. 1 is a schematic view of a gas turbine engine 10. The turbine engine 10 has a centerline or turbine engine axis of rotation 12 extending forward 14 to aft 16. The turbine engine 10 includes, in downstream serial flow relationship, a fan section 18 including a fan assembly 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and a nozzle section 37. A turbine core 38 can be defined by the compressor section 22, the combustion section 28, the turbine section 32, and the nozzle section 37.

The fan section 18 includes a fan casing 40 surrounding the fan assembly 20. The fan assembly 20 includes a plurality of fan blades 42 disposed radially about the turbine engine axis of rotation 12. The HP compressor 26, the combustor 30, and the HP turbine 34 form an engine core 44, which generates combustion gases. The turbine core 38, which includes the engine core 44, can be surrounded by core housing 46, which can be coupled with the fan casing 40. Fan supports 43 can include, by way of non-limiting example, one or more of rotatable or non-rotatable stabilizers, bearings, sensors, or connecting shafts.

The HP spool, HP shaft, or high speed shaft 48 is disposed coaxially about the turbine engine axis of rotation 12 of the turbine engine 10 and drivingly connects the HP turbine 34 to the HP compressor 26. The high speed shaft 48 can be considered part of the turbine engine 10.

An electric machine assembly 51 can selectively couple to the LP turbine spool, LP turbine shaft, or low speed shaft 56. The electric machine assembly 51 can couple the LP turbine 36 and the LP compressor 24. While the low speed shaft 56 can provide a rotational input/output to the electric machine assembly 51 it can be considered part of the turbine engine 10.

In the illustrated example, the electric machine assembly 51 includes an electric machine 52. The electric machine 52 can include one or more devices that use electromagnetic forces. It is contemplated that the electric machine 52 includes at least one drive shaft. It is further contemplated that the electric machine 52 can include any number of gears, shafts, transformers, magnetics, brushes, induction devices, or other electrical or mechanical elements.

The electric machine 52 can have an input/output 49 coupled to the low speed shaft 56 and an output 53 selectively coupled to the high speed shaft 48 via a first clutch assembly 50. Optionally, the electric machine assembly 51 can further include a first gearbox 54 and a second gearbox 57. The first gearbox 54 can couple the output 53 of the electric machine 52 to the first clutch assembly 50, where the first clutch assembly 50 selectively engages the high speed shaft 48. One or more portions of the second gearbox 57 can be part of the permanent connection between the input/output 49 of the electric machine 52 and the low speed shaft 56.

The low speed shaft 56 connects the LP turbine 36 to the input/output 49 of the electric machine 52. The electric machine 52 can drive the low speed shaft 56 by providing a rotatable output to the low speed shaft 56 via the input/output 49. Alternatively, or additionally, the electric machine 52 can receive an input via the input/output 49 from the low speed shaft 56 for the generation of electrical energy. The connection between the low speed shaft 56 and the input/output 49 of the electric machine 52 can be made via the second gearbox 57.

The low speed shaft 56 can couple to the electric machine 52 at any point, including a forward side, bottom portion, top portion, or aft side of the electric machine 52. It is further contemplated that the electric machine 52 can be located in-line with the low speed shaft 56 or the high speed shaft 48.

It is contemplated, in a differing and non-limiting example, that the electric machine 52 can couple to any number of components of the engine 10. It is further contemplated that the electric machine 52 can be located in any portion of the engine 10 or the aircraft (not shown).

Optionally, a bevel gearbox or the first gearbox 54 can be provided between or included in the electric machine 52 that rotatably couples at least a portion of the first clutch assembly 50 to the output 53 of the electric machine 52.

The LP compressor 24 and fan assembly 20 can be coupled to a supplemental shaft 58. The electric machine assembly 51 can further include a second clutch assembly 60 that selectively couples the supplemental shaft 58 to the electric machine 52 or the low speed shaft 56.

It is contemplated that the engagement of the second clutch assembly 60 can allow the electric machine 52, via a supplemental coupling 61, or the low speed shaft 56 to rotate the supplemental shaft 58. It is further contemplated that the engagement of the second clutch assembly 60 can allow the supplemental shaft 58 to rotate the electric machine 52 at the supplemental coupling 61 or rotate the low speed shaft 56.

The electrical energy from the electric machine 52 can be communicated to one or more accessories 62. The one or more accessories 62 can include one or more of a battery bank, lighting, pump, instrument, radio, flap, landing gear, or other systems or operative structures of the vehicle.

While illustrated in a specific configuration in FIG. 1, it is contemplated that at least the electric machine 52 can be orientated or located in alternate positions and maintain the same connectivity and function relative to the low speed shaft 56, the high speed shaft 48, and the supplemental shaft 58.

The high speed shaft 48, the low speed shaft 56, and the supplemental shaft 58 are rotatable about the engine centerline and couple to a plurality of rotatable elements, which can collectively define an inner rotor/stator. While illustrated as a rotor, it is contemplated that the inner rotor/stator can be a stator.

The LP compressor 24 and the HP compressor 26 respectively include a plurality of compressor stages 64, 68, in which a set of compressor blades 70, 72 rotate relative to a corresponding set of static compressor vanes 74, 76, which can also be called a nozzle, to compress or pressurize the stream of fluid passing through the stage. In a single compressor stage 64, 68, multiple compressor blades 70, 72 can be provided in a ring and can extend radially outwardly relative to the turbine engine axis of rotation 12, from a blade platform to a blade tip, while the corresponding static compressor vanes 74, 76 are positioned upstream of and adjacent to the rotating compressor blades 70, 72. It is noted that the number of blades, vanes, and compressor stages shown in FIG. 1 was selected for illustrative purposes only, and that other numbers are possible.

The LP compressor blades 70 for a stage of the compressor can be mounted to the supplemental shaft 58. The HP compressor blades 72 can be mounted to the high speed shaft 48. The vanes 74, 76 for a stage of the compressor can be mounted to the core housing 46 in a circumferential arrangement.

The HP turbine 34 and the LP turbine 36 respectively include a plurality of turbine stages 78, 80, in which a set of turbine blades 82, 84 is rotated relative to a corresponding set of static turbine vanes 86, 88, which can also be called a nozzle, to extract energy from the stream of fluid passing through the stage. In a single turbine stage 78, 80, multiple turbine blades 82, 84 can be provided in a ring and can extend radially outwardly relative to the turbine engine axis of rotation 12, from a blade platform to a blade tip, while the corresponding static turbine vanes 86, 88 are positioned upstream of and adjacent to the rotating blades 82, 84. It is noted that the number of blades, vanes, and turbine stages shown in FIG. 1 was selected for illustrative purposes only, and that other numbers are possible.

The HP turbine blades 82 for a stage of the turbine can be mounted to the high speed shaft 48. The LP turbine blades 84 for a stage of the turbine can be mounted to the low speed shaft 56 that is rotatably fixed to the electric machine 52. The vanes 86, 88 for a stage of the compressor can be mounted to the core housing 46 in a circumferential arrangement.

Complementary to the rotor portion, the stationary portions of the turbine engine 10, such as the static vanes 74, 76, 86, 88 among the compressor section 22 and turbine section 32 are also referred to individually or collectively as an outer rotor/stator. As illustrated, the outer rotor/stator can refer to the combination of non-rotating elements throughout the turbine engine 10. Alternatively, the outer rotor/stator that circumscribes at least a portion of the inner rotor/stator, can be designed to rotate. The inner or outer rotor/stator can include at least one component that can be, by way of non-limiting example, a shroud, vane, nozzle, nozzle body, combustor, hanger, or blade, where the at least one component is a plurality of circumferentially arranged component segments having confronting pairs of circumferential ends.

In operation, in a first mode or starting mode, the electric machine 52 can function as a starter. Energy is supplied to the electric machine 52. Energy can be supplied to the electric machine 52, for example, from a battery bank, a mechanical starter, or electrical generating device. It is contemplated that the energy supplied to the electric machine 52 is from the one or more accessories 62. The energy supplied to the electric machine 52 rotates one or more components of the electric machine 52 resulting in rotation of the output 53. The first clutch assembly 50 selectively couples the output 53 of the electric machine 52 to the high speed shaft 48, which rotates the high speed shaft 48. The rotation of the high speed shaft 48 rotates the blades 72, 82 of the HP compressor 26 and HP turbine 34.

As the electric machine 52 provides a rotational output at the output 53 to the high speed shaft 48, the low speed shaft 56 that can be coupled to the input/output 49 of the electric machine 52 is also supplied a rotation output. The rotation of the low speed shaft 56 can result in the rotation of the blades 84 of the LP turbine 36.

As the rotational velocity of the high speed shaft 48 increases, the supplemental shaft 58 is selectively coupled to the supplemental coupling 61 of the electric machine 52 or the low speed shaft 56 via the second clutch assembly 60. The second clutch assembly 60 can selectively engage based on, for example, axial thermal expansion of one or more components of the electric machine 52, the low speed shaft 56, or other rotating component adjacent to the second clutch assembly 60. By way of non-limiting example, the second clutch assembly 60 additionally or alternatively can be activated or engage based on the load carried by one or more bearings, one or more speed or thermal sensors, counter-rotation, input provided by an active automatic control, a pilot or user, or reaching a predetermined torque value. The second clutch assembly 60 can engage before or after the electric machine 52 switches from the first mode to a second mode.

Once coupled via the second clutch assembly 60, the supplemental shaft 58 can receive a rotational output from the supplemental coupling 61 of the electric machine 52 via the second gearbox 57 or the low speed shaft 56. Alternatively, the supplemental shaft 58 can provide a rotational input at the supplemental coupling 61 to the electric machine 52 for generation of electrical power. Electric power from the electric machine 52 can be provided to the one or more accessories 62.

In a second mode or generating mode, the electric machine 52 functions primarily as a generator, providing electrical energy to the one or more accessories 62. The transition from the first mode to the second mode occurs when the first clutch assembly 50 disengages the output 53 of the electric machine 52 from the high speed shaft 48. The first clutch assembly 50 is adapted to disengage the electric machine 52 from the high speed shaft 48 when a predetermined torque or speed of the high speed shaft 48 is reached. The predetermined torque or speed can depend on the idle speed of the turbine engine 10. As used herein, "idle speed" is the speed at which the engine core 44 has to spin in order for the turbine engine 10 to idle or self-sustain. It is contemplated that the predetermined torque or speed can be greater than or equal to the idle speed of the turbine engine 10. However, it is contemplated that the predetermined torque or speed can be less than the idle speed of the turbine engine 10.

Once the engine is self-sustaining, the airflow exiting the fan section 18 is split such that a portion of the airflow is channeled into the LP compressor 24, which then supplies pressurized airflow 90 to the HP compressor 26, which further pressurizes the air.

The pressurized airflow 90 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the electric machine 52, and the exhaust gas is ultimately discharged from the turbine engine 10 via the nozzle section 37. The driving of the LP turbine 36 can also drive the supplemental shaft 58 to rotate the fan assembly 20 and the LP compressor 24 via the electric machine 52 or the second clutch assembly 60.

The electric machine 52 can generate electricity in the second mode as a result of the rotation of the LP turbine 36 due to the exhaust of gases from the combustor 30. The rotation of the LP turbine 36 results in the rotation of the low speed shaft 56. The low speed shaft 56 can provide a rotatable input to the input/output 49 of the electric machine 52 for generating electrical energy. Alternatively, the low speed shaft 56 rotates a portion of the second gearbox 57, which provides an input to the input/output 49 of the electric machine 52. Electric power from the electric machine 52 is used to power the one or more accessories 62.

A portion of the pressurized airflow 90 can be drawn from the compressor section 22 as bleed air 92. The bleed air 92 can be drawn from the pressurized airflow 90 and provided to engine components requiring cooling. The temperature of pressurized airflow 90 entering the combustor 30 is significantly increased. As such, cooling provided by the bleed air 92 is necessary for operating of such engine components in the heightened temperature environments.

A remaining portion of the airflow 94 bypasses the LP compressor 24 and the engine core 44 and exits the turbine engine 10 through a stationary vane row, and more particularly an outlet guide vane assembly 96, comprising a plurality of airfoil guide vanes 98, at the fan exhaust side 100. More specifically, a circumferential row of radially extending airfoil guide vanes 98 are utilized adjacent the fan section 18 to exert some directional control of the airflow 94.

Some of the air supplied by the fan assembly 20 can bypass the engine core 44 and be used for cooling of portions, especially hot portions, of the turbine engine 10, and/or used to cool or power other aspects of the aircraft. In the context of a turbine engine, the hot portions of the engine are normally downstream of the combustor 30, especially the turbine section 32, with the HP turbine 34 being the hottest portion, as it is directly downstream of the combustion section 28. Other sources of cooling fluid can be, but are not limited to, fluid discharged from the LP compressor 24 or the HP compressor 26.

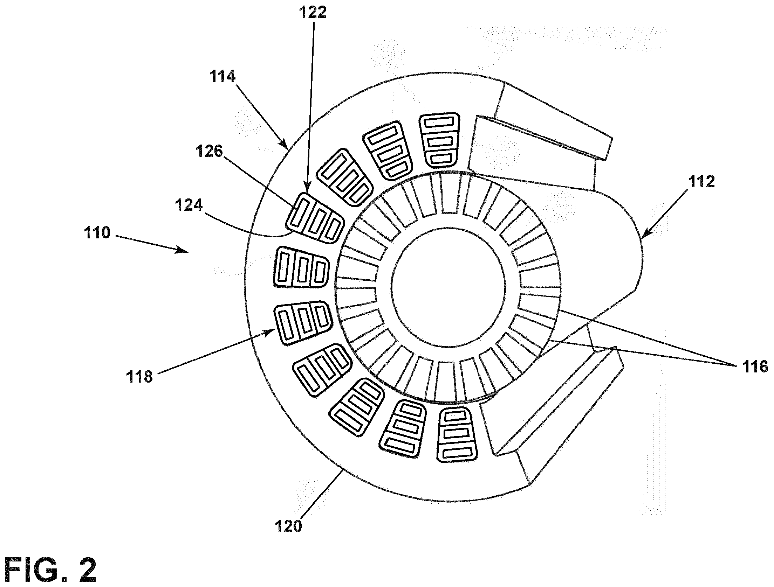

FIG. 2 is a cut-away view of an electric machine 110 that can be one or more portions of the electric machine 52 of FIG. 1 or a portion of the electric machine assembly 51 from FIG. 1. While illustrated as an electric machine 52, 110 for the turbine engine 10, it is contemplated that aspects described herein can apply to any electric machine. By way of non-limiting example, aspects described herein can apply to electric machines located in an aircraft spaced from the turbine engine. By way of further non-limiting example, aspects described herein can apply to electric machines in a vehicle, generally used for power generation, starting, or other vehicle, industrial, or residential applications that require an electric machine.

The electric machine 110 includes a rotor 112 that rotates within a stator 114. While illustrated as having a single rotor and stator, it is contemplated that the electric machine 110 can include any number of stators or rotors, such as, but not limited to dual rotors or dual stators.

The rotor 112 can include magnets 116. The stator 114 has a stator body 120 that can include windings 118. The windings 118 can be disposed circumferentially about the rotor 112.

While illustrated as having the rotor 112 rotate within the stator 114, it is contemplated that the rotor 112 can circumscribe an exterior of the stator 114. That is, the stator 114 can be within the rotor 112, while the rotor 112 rotates around the stator 114.

By way of non-limiting example, the rotor 112 can include windings in place of the magnets 116, while the stator 114 can include magnets in place of the windings 118. By way of further non-limiting example, the rotor 112 can include windings such that both the rotor 112 and the stator 114 include windings.

For generators, by way of example, the rotor 112 rotates within the stator 114 and a voltage is created by way of magnetic induction, thus converting mechanical energy into electrical energy.

For motors, by way of example, electric currents flowing through the windings 118 and creates magnetic fields that cause the rotor 112 to rotate within the stator 114.

Each winding 118 includes one or more insulated conductive components 122. In aspects of the disclosure, the one or more insulated conductive components 122 can be equipped with cooling channels (not shown in FIG. 2).

The insulated conductive components 122 include at least one layer of insulation 124 that electrically insulates a conductive component illustrated as a conductor 126.

While illustrated as rectangular, it is contemplated that the cross-section of the insulated conductive components 122 or the conductor 126 can be any shape, including, but not limited to, a rounded rectangle, a trapezoid, a rounded trapezoid, a star shape, a triangle, a rounded triangle, an oval, or any combination therein. It is further contemplated that the cross-section of the insulated conductive components 122 or the conductor 126 can be any regular or irregular polygon and can be made from one or more shapes. That is, the cross-sectional shape of each of the insulated conductive components 122 or the conductor 126 (or any conductive component of the electric machine 110) can be a lobed polygon having any number of sides. In some embodiments, the cross-sectional shape of at least one turn of the windings 118 varies along a length (into the page) of the winding. That is, the insulated conductive components 122 or the conductor 126 can change cross-sectional shape along a length of the insulated conductive components 122. Further, it is contemplated that each turn or each insulated conductive component 122 of the windings 118 can be solid or have at least a hollow portion of any desirable shape and size.

The windings 118 can be concentrated windings, distributed windings, concentrated tooth windings, lap windings, wave windings, concentric windings, or hairpin windings. That is, the windings 118 can be any coil formed from a conductive material and having multiple turns electrically insulated from each other or a single turn electrically insulated from other components of the electric machine 52, 110.

The electric machine 110 can be a radial flux machine having an inner rotor, outer rotor, dual stator, or dual rotor. Alternatively, it is contemplated in another different non-limiting example, the electric machine 110 can be an axial flux machine. The axial flux machine can have, for example, a single rotor with a dual stator or a single stator with a dual rotor.

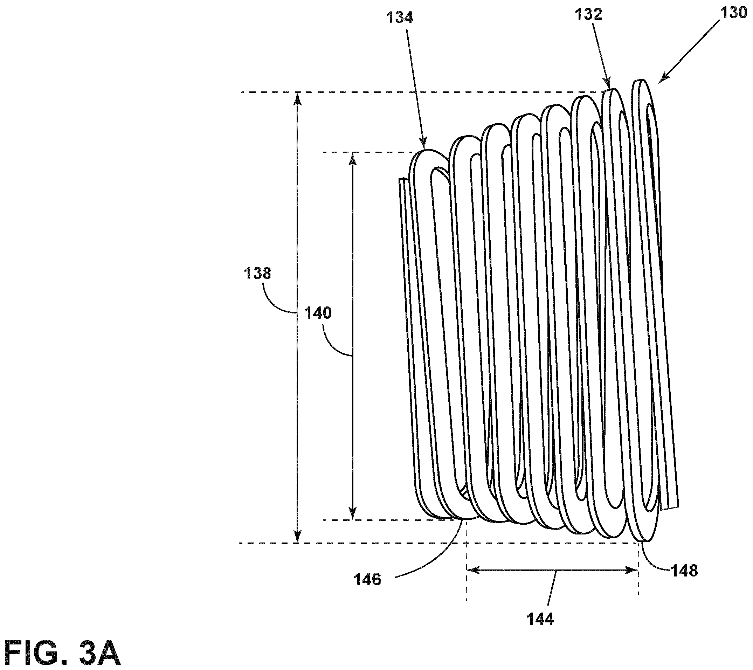

FIG. 3A is an illustration of the insulated conductive component 122 that is illustrated, by way of non-limiting example, as a concentrated winding 130, that can be used as the winding 118 in the electric machine 110 of FIG. 2 or as a portion of the electric machine 52 of FIG. 1. The concentrated winding 130 can be formed, for example, by extrusion or forming, casting, milling, additive manufacturing, or any other metal powder processes.

The concentrated winding 130 can include at least a first turn 132 and a second turn 134. A first length 138 can be measured between ends of the first turn 132. It is contemplated that the first length 138 can be the largest dimension of the first turn 132.

A second length 140 can be measured between ends of the second turn 134. It is contemplated that the second length 140 can be the largest dimension of the second turn 134. The second length 140 can be less than the first length 142. However, in differing and non-limiting examples, the second length 140 can be equal to or greater than the first length 142.

The concentrated winding 130 is illustrated in a stretched or elongated state, illustrating the helical relationship between the turns. The turns generally have a racetrack or oval shape, however, any shape is contemplated that produces a winding.

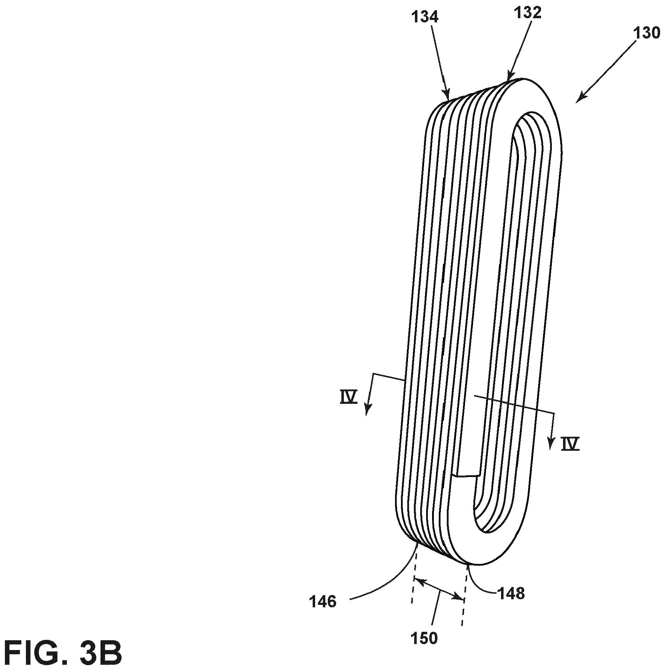

A stretched distance 144 can be measured from an end 146 of the first turn 132 to an end 148 of the second turn 134 when the concentrated winding 130 is in the stretched or elongated state. FIG. 3B is an illustration of the concentrated winding 130 of FIG. 3A in a relaxed or unstretched state. A relaxed distance 150 can be measured from the end 146 of the first turn 132 to the end 148 of the second turn 134 when the concentrated winding 130 is in the relaxed or unstretched state. The relaxed distance 150 is less than the stretched distance 144.

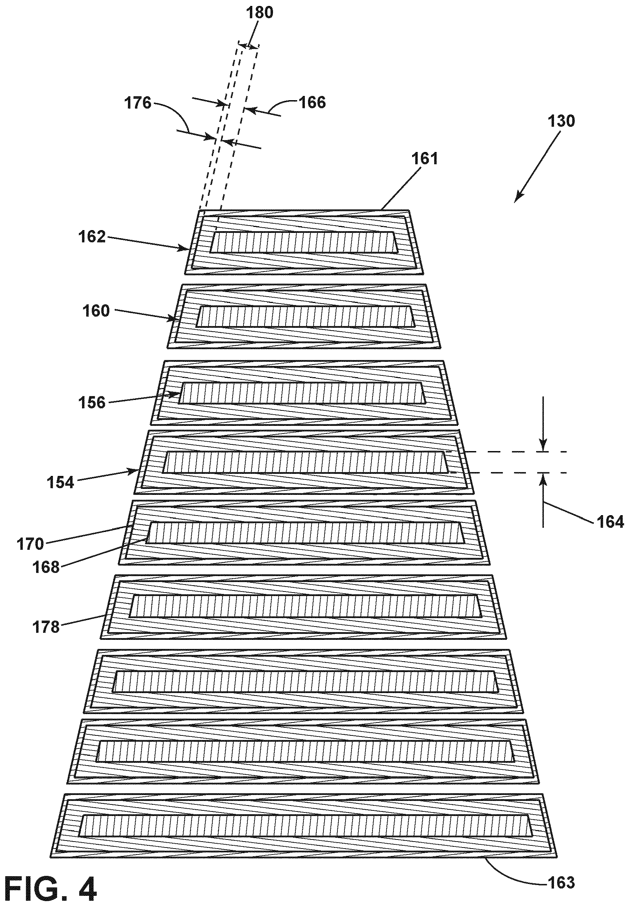

FIG. 4 is a schematic cross-section of the concentrated winding 130 of FIG. 3B. The concentrated winding 130 can be used as at least one of the windings 118 of the electric machine 110 (FIG. 2). The concentrated winding 130 includes insulation 154 and a conductive component 156. The insulation 154 can include a first dielectric coating 160 and a second dielectric coating 162. While illustrated as a single layer, it is contemplated that the first dielectric coating 160 or the second dielectric coating 162 can include multiple layers. It is further contemplated that the multiple layers can include different materials.

The conductive component 156 can be formed from helical wrappings defining discrete turns that extend from an upper end 161 to a lower end 163 of the concentrated winding 130.

A conductor thickness 164 is a cross-sectional thickness of the conductive component 156. While illustrated at a fourth turn, counting from the upper end 161, the conductor thickness 164 can be measured at any turn or level. In aspects disclosed herein, the conductor thickness 164 can be between or equal to 0.1 millimeters and 500.0 millimeters. In aspects disclosed herein, the conductor thickness 164 can be between or equal to 0.5 millimeters and 5.0 millimeters.

While illustrated as generally uniform, the conductor thickness 164 can vary from one portion of the concentrated winding 130 to another. That is, the conductor thickness 164 can vary from one turn or level to the next.

The first dielectric coating 160 can include a first dielectric material. The first dielectric material can include, for example, any one or more of polyester resin, plastic resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

The first dielectric material can be applied using a dispersion coating, such as a liquid dispersion coating. Dispersion can be a process in which a dry powder substance is mixed with a liquid such that all the individual particles of the dry powder become separated from each other and are generally evenly distributed and completely mixed in the liquid medium. Applying the dispersion coating to the conductive component 156 can include dipping the conductive component 156 in a liquid that includes the first dielectric. Additionally, or alternatively, the dispersion coating can be applied by painting, spraying, vacuum pressure impregnation, or otherwise extruding the first dielectric material over the conductive component 156.

The first dielectric material, when applied, can substantially circumferentially and longitudinally envelope the conductive component 156 of the concentrated winding 130, defining the first dielectric coating 160.

A first coating thickness 166 is measured from an outer surface 168 of the conductive component 156 to an outermost extent 170 of the first dielectric coating 160. In aspects of the disclosure herein, the first coating thickness 166 can be equal to or between 0.01 millimeters and 5.0 millimeters. In embodiments, the first coating thickness 166 can be equal to or between or equal to 0.02 millimeters and 0.5 millimeters. The first coating thickness 166 can be measured when the first dielectric coating 160 is applied. Alternatively, in another different and non-limiting example, first coating dielectric thickness 166 can be measured after the first coating 160 cures.

While illustrated as generally uniform, the first coating thickness 166 can vary from one portion of the concentrated winding 130 to another. That is, while the first dielectric coating 160 can circumscribe or cover each turn of the concentrated winding 130, the first coating thickness 166 does not have to be uniform.

The second dielectric coating 162 can include a second dielectric material. The second dielectric material can include, for example, any one or more of polyester resin, plastic resin, polyepoxides, bismaleimide, silicone, polysulfone, polyethersulfones, polyphenylsulfone epoxy, parylene, para-xylylene, polyetherketoneketone (PEKK) or polyetheretherketone (PEEK). The second dielectric coating 162 can be a different combination of materials than the first dielectric coating 160. That is, the first dielectric coating 160 and the second dielectric coating 162 can include different material or have different dielectric constants.

In other words, the first dielectric coating 160 and the second dielectric coating 162 can include one or more of the same materials, however, the resulting combination of materials or the proportions of materials used can be different between the first dielectric coating 160 and the second dielectric coating 162.

Alternatively, it is contemplated that in a differing and non-limiting example, the first dielectric coating 160 and the second dielectric coating 162 can be the same. That is, the first dielectric coating 160 and the second dielectric coating 162 can include the same materials with the same proportions.

A second coating thickness 176 is measured from the outermost extent 170 of the first dielectric coating 160 to an outermost extent or an outside surface 178 of the concentrated winding 130. The second coating thickness 176 can be equal to or between 0.001 - 5.0 millimeters. More specifically, the second coating thickness 176 can be equal to or between or equal to 0.02-0.5 millimeters. The second coating thickness 176 can be measured when the second dielectric coating 162 is applied. Alternatively, in another different and non-limiting example, second coating thickness 176 can be measured after the second dielectric coating 162 cures.

While illustrated as generally uniform, the second coating thickness 176 can vary from one portion of the concentrated winding 130 to another.

The second dielectric material can be applied by electrostatic coating, that can be, for example electrostatic powder coating. That is, the second dielectric, or solution suspending the second dielectric, can be electrostatically charged and sprayed or otherwise applied to the first dielectric coating 160. The second dielectric material is attracted to the conductive component 156 and bonds with the first dielectric coating 160, as the conductive component 156 is grounded.

Alternatively, it is contemplated that in a different and non-limiting example, the second dielectric material can be applied by flocking spray or chemical vapor deposition to define the second dielectric coating 162.

The second dielectric, when applied, can substantially circumferentially and longitudinally envelope the first dielectric coating 160 of the concentrated winding 130, defining the second dielectric coating 162. It is contemplated that the second dielectric coating 162 can fill in or otherwise smooth peaks and recesses in the first dielectric coating 160, resulting in the insulation 154 being a higher quality. That is, the insulation 154 can have an improved quality or smoother outside surface 178. It is also contemplated that the application of the first dielectric coating 160 and the second dielectric coating 162 can provide improved accuracy in thickness of the insulation 154. In other words, the predetermined or desired insulation thickness 180 of the insulation 154 can be more accurately achieved by the application of the first dielectric coating 160 and the second dielectric coating 162.

The insulation thickness 180 is measured from the outer surface 168 of the conductive component 156 to the of the outside surface 178 of the concentrated winding 130 or the outside surface of the insulation 154.

In aspects of the disclosure herein, the insulation thickness 180 can be equal to or between 0.01 millimeters and 10.0 millimeters. In aspects of the disclosure, the insulation thickness 180 can be equal to or between or equal to 0.22 millimeters and 1.00 millimeter.

While illustrated as generally uniform, the insulation thickness 180 can vary from one portion of the concentrated winding 130 to another.

While the concentrated winding 130 is illustrated as having the first dielectric coating 160 and the second dielectric coating 162, any number of coatings or dielectric coatings are contemplated.

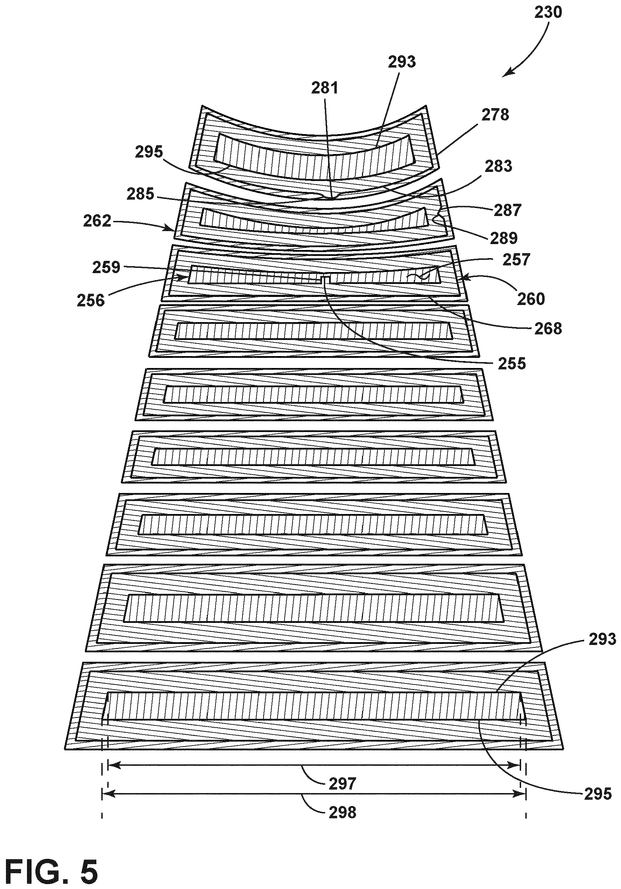

FIG. 5 illustrates a schematic cross-section of a concentrated winding 230 according to an aspect of the disclosure herein. The concentrated winding 230 is illustrated by way of example, as a variable cross-section coil.

The concentrated winding 230 is similar to the concentrated winding 130, therefore, like parts of the concentrated winding 230 will be identified with like numerals increased by 100, with it being understood that the description of the like parts of the concentrated winding 130 applies to the concentrated winding 230, except where noted.

The concentrated winding 230 includes insulation 254 and a conductive component 256. The insulation 254 can include a first dielectric coating 260 and a second dielectric coating 262.

A surface pore or a conductor recessed portion 259 can be located in one or more portions of the conductive component 256. The conductor recessed portion 259 is defined by a portion of an outer surface 268 of the of the conductive component 256 extending toward an inner portion 257 of the conductive component 256. While the conductor recessed portion 259 is illustrated as a single recess, any number of recesses at any of the outer surfaces 268 of the turns of the concentrated winding 230 are contemplated. It is further contemplated that the conductor recessed portion 259 can have any shape.

A first protrusion 255 can extend from the first dielectric coating 260. The first protrusion 255 can be part of the first dielectric coating 260. The first protrusion 255 can at least partially fill the conductor recessed portion 259. It is contemplated that the geometry of the first protrusion 255 can be complementary to the geometry of the conductor recessed portion 259, such that the conductor recessed portion 259 is completely filled with the first dielectric.

A second protrusion 281 of the first dielectric coating 260 can protrude from an outer surface 283 of the first dielectric coating 260. The second protrusion 281 can be received by the second dielectric coating 262. That is, second protrusion 281 can extend into the second dielectric coating 262. A first coating recess 285 in the second dielectric coating 262 can receive or be complementary to the second protrusion 281 of the first dielectric coating 260.

A third protrusion 287 extends from the second dielectric coating 262 into the first dielectric coating 260. The third protrusion 287 can be received or have a complementary shape to a second coating recess 289 of the first dielectric coating 260.

That is, any combination of protrusions 255, 281, 287 or recessed portions 259, 285, 289 in the conductive component 256, the first dielectric coating 260, and the second dielectric coating 262 are contemplated. The filling of recesses with protrusions can result in a smoother outer surface 278 of the insulation 254 of the concentrated winding 230.

Each turn of the concentrated winding 230 can have an upper face or a top portion 293 and a lower face or a bottom portion 295. The top portion 293 and the bottom portion 295 can have different shapes. That is, at least part of the top portion 293 is not generally parallel to the bottom portion 295. As used herein, the term "generally parallel" implies the angle between a representative line or plane of the first object and a representative line or plane of the second object is equal to or between -5 degrees and 5 degrees. It is contemplated that the concentrated winding 230 can have different cross sectional shapes or dimensions.

A top width 297 of the top portion 293 can be different than a bottom width 299 of the bottom portion 295. Changing cross-sectional area of each turn of the concentrated winding 230, indicated by a difference in the top width 297 and the bottom width 299, can improve the power density of the electric machine 52, 110 (FIG. 1 and FIG. 2).

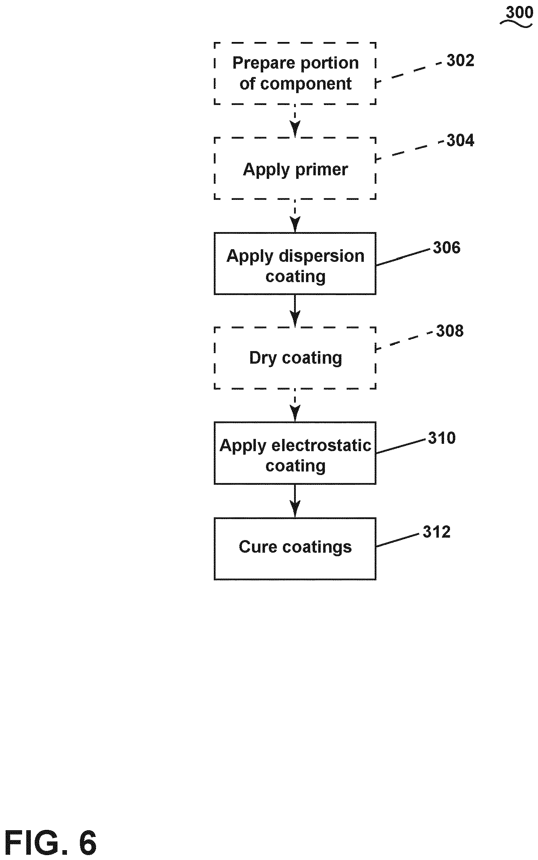

Referring now to FIGS. 4-6, FIG. 6 illustrates a method 300 of electrically insulating the conductive component 156, 256 for the electric machine 52, 110.

The conductive component 156, 256 can be formed by one or more of extrusion or forming, casting, milling, or by additive manufacturing. The conductive component 156, 256 can be pure copper or pure aluminum. Alternatively, it is contemplated that the conductive component 156, 256 can include one or more of copper, silver, gold, aluminum, phosphorus, beryllium, manganese, silicon, nickel, platinum, zinc, iron, steel, lead, brass, carbon nanotubes, graphene, tungsten, or tin.

The conductive component 156, 256 can form a portion of the insulated conductive component 122 or the concentrated windings 130, 230 in the electric machine 110. The conductive component 156, 256 can include the at least one turn in which the cross-section area of the conductive component 156, 256 changes. That is, the cross-section can change between each turn or coil or change in each turn or coil.

Alternatively, it is contemplated that in a differing and non-limiting example, the conductive component 156, 256 can form distributed windings, concentrated tooth windings, lap windings, wave windings, concentric windings, or hairpin windings in the electric machine 52, 110.

The method 300 can optionally include, at 302, preparing the at least a portion of the outer surface 168, 268 of the conductive component 156, 256. The preparation of the outer surface 168, 268 can include the application of a solvent cleaner to the outer surface 168, 268. Additionally, or alternatively, the outer surface 168, 268 can be prepared by the submersion of the at least a portion of the conductive component 156, 256 into one or more cleaning solutions. By way of non-limiting example, the solvent cleaner or cleaning solution can include acetone, alcohol, or other copper or metal cleaning solvents.

Preparation of the outer surface 168, 268 can include sanding, milling, polishing, or otherwise contacting the portion of the outer surface 168, 268 with one or more solid objects to remove excess material from the outer surface 168, 268. That is, preparing a surface can include removing material from the surface. In another different and non-limiting example, preparing a surface can include the addition or movement of material to the surface.

Optionally, the application of solvent cleaner to the outer surface 168, 268, the first dielectric coating 160, 260, or the second dielectric coating 162, 262 can occur at any point during the method 300. Similarly, is contemplated that contact from the one or more solid objects can occur at any at point of the method 300 to the outer surfaces 168, 268, the first dielectric coating 160, 260, or the second dielectric coating 162, 262.

Optionally, at 304, a primer coating can be applied to the at least a portion of the outer surfaces 168, 268. The primer coating can include, but is not limited to, a polyamide or polyamide-imide spray coating. The primer coating can be applied after the preparation of the outer surface 168, 268. Alternatively, it is further contemplated that in a differing and non-limiting example, the outer surface 168, 268 can receive the primer coating before the surface preparation, or the primer coating can be applied in lieu of the surface preparation.

Optionally, the primer coating can be dried or cured prior to the application of the first dielectric coating 160, 260.

At 306, the first dielectric material is applied using dispersion coating. The dispersion coating applied to the conductive component 156, 256 forms or defines the dispersion coating or the first dielectric coating 160. While illustrated as a single layer, any number of layers applied by liquid dispersion are contemplated.

The dispersion coating can be applied by fluidized bed coating, liquid dip coating, liquid spray coating.

Alternatively, it is contemplated that in a yet another differing and non-limiting example, the dispersion coating can be applied using any combination of one or more of fluidized bed coating, liquid dip coating, liquid spray coating, flock spraying, or chemical vapor deposition.

Optionally, at 308, the first dielectric coating 160 can be allowed to dry. The drying of the first dielectric coating 160 can include heating the first electric coating that surrounds the conductive component 156, 256. Additionally, or alternatively, the drying can include application of an airflow. In another different and non-limiting example, heat can be applied to the first dielectric coating 160 to cure or dry the first dielectric coating 160.

At 310, the second dielectric material is applied. The second dielectric material can be applied as an electrostatic coating. The electrostatic coating can be applied using electrostatic spray powder coating. Alternatively, it is contemplated that in a differing and non-limiting example, the electrostatic coating can be applied using flock spraying or chemical vapor deposition. Alternatively, it is further contemplated that in a yet another differing and non-limiting example, the electrostatic coating can be applied using any combination of electrostatic spray powder coating, flock spraying, or chemical vapor deposition. While illustrated as a single layer of electrostatic coating, any number of electrostatic layers or coatings are contemplated. By way of non-limiting example, the second dielectric coating 162 can be a first electrostatic layer or coating and a second electrostatic layer or coating.

The second dielectric is applied to portions of the conductive component 156, 256 or the first dielectric coating 160 to defining the second dielectric coating 162. The first dielectric coating 160 and the second dielectric coating 162 can surround or circumscribe at least a portion of the conductive component 156, 256.

At 312, the conductive component 156, 256, the first dielectric coating 160, 260 and the second dielectric coating 162, 262 are cured. Curing can occur between 15 °C and 500 °C. The curing can include heating the conductive component, the first dielectric coating 160, 260 and the second dielectric coating 162, 262 between 25 and 500 °C. Curing can occur by bringing the temperature of at least one of the conductive component 156, 256, the first dielectric coating 160, 260 or the second dielectric coating 162, 262 up to a temperature between 15 °C and 500 °C. Additionally, or alternatively, the curing can occur by placing the conductive component 156, 256, the first dielectric coating 160, 260 and the second dielectric coating 162, 262 in an area (such as, for example, an oven or similar device) that has an internal temperature between 15 °C and 500 °C.

Optionally, any portion of the method 300 can be repeated. By way of non-limiting example, more than one electrostatic coating can be applied, where the additional coating can include the same materials or different materials than the originally applied electrostatic coating.

Optionally, the method 300 can include, at any point, sanding, milling, polishing, or otherwise contacting one or more surfaces of the insulated conductive component 122 to another material.

Benefits associated with the inspection system disclosed herein provide a high-quality insulation using a two-step insulation process that includes the dispersion coating and the electrostatic coating. Applying dielectric materials using both a dispersion coating and an electrostatic coating provides high-quality insulation even to conductive components with complex geometries. The dispersion coating can provide contact between the first dielectric material and the various geometries of the conductive component, while providing a conformal coating which can seal surface pores or fill irregular surface features. This is followed by the application of an electrostatic coating which can smooth the surface of the dispersion coating. The application of the electrostatic coating can also be used to obtain more precise insulation thickness at each portion of the conductive component.

That is, protrusions or recesses in the conductive component can be smoothed by the first dielectric coating, which is a conformal coating. Further, protrusions or recesses in first dielectric coating can be smoothed by the second dielectric coating, which can be another conformal coating due to the nature of the second dielectric material or due to the precision in which the second dielectric coating is applied.

Another benefit can be effective application of insulation to pre-formed conductive components having complex shapes, such as an additively manufactured copper coil. Additive manufacturing allows for much more complex geometries, such as changing cross-sections or curvatures of the conductive component. These complex geometries can improve the power density of the electric machine, but may be challenging to coat using traditional methods. Irregular thickness of the insulation, rough surfaces of the insulation, and portions of the geometry that are difficult to reach using electrostatic coatings, are some of the challenges encountered with traditional coating methods that are solved using the method described herein.

Yet another advantage can be the use of PEEK in the dispersion coating or the electrostatic coating. PEEK offers higher temperature capability, chemical resistance, and improved coating toughness compared to traditional coatings that can include epoxy or parylene. Insulation that includes PEEK can have a higher dielectric breakdown strength. That is, insulation that includes PEEK can resist a higher maximum electrical potential before the electrical current breaks through the material (and the material is no longer an insulator) than traditional coatings, such as, but not limited to coatings without PEEK that can include, for example, epoxy or parylene.

PEEK is also less brittle than traditional coatings without PEEK that can include, for example, epoxy.

Insulation that includes PEEK can also maintain integrity at higher temperatures. For example, insulation that includes PEEK can have a temperature capability of 220 °C or more.

The varying aspects of the disclosure discussed herein are for illustrative purposes and not meant to be limiting. It should be appreciated that application of the disclosed method can be for applicable any conductive components of any electric machine.

To the extent not already described, the different features and structures of the various embodiments can be used in combination, or in substitution with each other as desired. That one feature is not illustrated in all of the embodiments is not meant to be construed that it cannot be so illustrated, but is done for brevity of description. Thus, the various features of the different embodiments can be mixed and matched as desired to form new embodiments, whether or not the new embodiments are expressly described. All combinations or permutations of features described herein are covered by this disclosure.

This written description uses examples to describe aspects of the disclosure described herein, including the best mode, and also to enable any person skilled in the art to practice aspects of the disclosure, including making and using any devices or systems and performing any incorporated methods. The patentable scope of aspects of the disclosure is defined by the claims, and can include other examples that occur to those skilled in the art. Such other examples are intended to be within the scope of the claims if they have structural elements that do not differ from the literal language of the claims, or if they include equivalent elements with insubstantial differences from the literal languages of the claims.

Further aspects of the disclosure are provided by the subject matter of the following clauses:

A method of electrically insulating a conductive component for an electric machine, the method comprising applying a dispersion coating of a first dielectric material to the conductive component to form a first dielectric coating, applying an electrostatic coating of a second dielectric material to the conductive component to form a second dielectric coating, and curing the first dielectric coating and the second dielectric coating.

The method of any preceding clause, wherein the first dielectric coating is applied before the second dielectric coating.

The method of any preceding clause, further comprising drying the first dielectric coating before applying the electrostatic coating.

The method of any preceding clause, wherein the first dielectric coating comprises polyester resin, plastic resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

The method of any preceding clause, wherein the second dielectric coating comprises polyester resin, plastic resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

The method of any preceding clause, wherein the first dielectric coating and the second dielectric coating comprise polyetheretherketone (PEEK).

The method of any preceding clause, wherein the conductive component is additively manufactured.

The method of any preceding clause, wherein the additively manufactured conductive component comprises one or more of copper, silver, gold, aluminum, phosphorus, beryllium, manganese, silicon, nickel, platinum, zinc, iron, steel, lead, brass, carbon nanotubes, graphene, tungsten, or tin.

The method of any preceding clause, further comprising forming distributed windings, concentrated windings, concentrated tooth windings, lap windings, wave windings, concentric windings, or hairpin windings in the electric machine with the conductive component.

The method of any preceding clause, wherein the conductive component comprises concentrated windings, wherein a subset of the concentrated windings include a changing cross-section.

The method of any preceding clause, further comprising, before the applying of the dispersion coating, preparing at least a portion of an outer surface of the conductive component.

The method of any preceding clause, further comprising, after the preparing the at least a portion of the outer surface and before the applying of the dispersion coating, applying a primer coating to the at least a portion of the outer surface.

The method of any preceding clause, wherein the curing the first dielectric coating and the second dielectric coating further comprises heating the conductive component, the first dielectric coating, and the second dielectric coating between 25 °C and 500 °C.

The method of any preceding clause, wherein the applying the electrostatic coating further comprises applying at least a first electrostatic coating and a second electrostatic coating to form the second dielectric coating.

The method of any preceding clause, further comprising drying the first electrostatic coating before applying the second electrostatic coating.

A method of coating a variable cross-section coil for an electric machine, the method comprising additively manufacturing a variable cross-section coil, wherein at least one turn of the variable cross-section coil includes a first surface and a second surface, wherein a cross-section of the at least one turn varies from the first surface to the second surface, applying a dispersion coating of a first dielectric material to the variable cross-section coil to form a first dielectric coating, applying an electrostatic coating of a second dielectric material to the variable cross-section coil to form a second dielectric coating, wherein the second dielectric coating couples to the first dielectric coating, and curing the dispersion coating and the electrostatic coating.

The method of any preceding clause, further comprising drying the first dielectric coating before the applying the electrostatic coating.

The method of any preceding clause, wherein the first dielectric coating or the second dielectric coating include one or more of: plastic resin or polyester resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

The method of any preceding clause, further comprising, before the applying of the dispersion coating, preparing the at least a portion of the outer surface of the conductive component.

The method of any preceding clause, further comprising, after the preparing the at least a portion of the outer surface and before the applying of the dispersion coating, applying a primer coating to the at least a portion of the outer surface.

## Claims

1. A method (300) of electrically insulating a conductive component (156, 256) for an electric machine (52, 110), the method (300) comprising:
applying (306) a dispersion coating of a first dielectric material to the conductive component (156, 256) to form a first dielectric coating (160, 260);
applying (310) an electrostatic coating of a second dielectric material to the conductive component (156, 256) to form a second dielectric coating (162, 262); and
curing (312) the first dielectric coating (160, 260) and the second dielectric coating (162, 262).

2. The method (300) of claim 1, wherein the first dielectric coating (160, 260) is applied before the second dielectric coating (162, 262).

3. The method (300) of claim 1, further comprising drying (308) the first dielectric coating (160, 260) before applying (310) the electrostatic coating.

4. The method (300) of claim 1, wherein the first dielectric coating (160, 260) comprises polyester resin, plastic resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

5. The method (300) of claim 4, wherein the second dielectric coating (162, 262) comprises polyester resin, plastic resin, polyepoxides, bismaleimide, silicone, polysulfone, polyethersulfones, polyphenylsulfone epoxy, parylene, para-xylylene, polyetherketoneketone (PEKK), or polyetheretherketone (PEEK).

6. The method (300) of any of claims 1-5, wherein the first dielectric coating (160, 260) and the second dielectric coating (162, 262) comprise polyetheretherketone (PEEK).

7. The method (300) of any of claims 1-6, wherein the conductive component (156, 256) is additively manufactured.

8. The method (300) of claim 7, wherein the conductive component (156, 256) includes one or more of copper, silver, gold, aluminum, phosphorus, beryllium, manganese, silicon, nickel, platinum, zinc, iron, steel, lead, brass, carbon nanotubes, graphene, tungsten, or tin.

9. The method (300) of claim 7, further comprising forming distributed windings, concentrated windings, concentrated tooth windings, lap windings, wave windings, concentric windings, or hairpin windings in the electric machine (52, 110) with the conductive component (156, 256).

10. The method (300) of claim 9, wherein the additively manufactured conductive component (156, 256) comprises concentrated windings, wherein a subset of the concentrated windings include a changing cross-section.

11. The method (300) of any of claims 1-10, further comprising, before applying (306) of the dispersion coating (160, 260), preparing (302) the at least a portion of an outer surface (168, 268) of the conductive component (156, 256).

12. The method (300) of claim 11, further comprising, after the preparing (302) the at least a portion of the outer surface (168, 268) and before the applying (306) of the dispersion coating, applying (304) a primer coating to the at least a portion of the outer surface (168, 268).

13. The method (300) of any of claims 1-12, wherein the curing (312) the first dielectric coating (160, 260) and the second dielectric coating (162, 262) further comprises heating the conductive component (156, 256), the first dielectric coating (160, 260), and the second dielectric coating (162, 262) between 25 °C and 500 °C.

14. The method (300) of any of claims 1-13, wherein the applying (310) the electrostatic coating further comprises applying at least a first electrostatic coating and a second electrostatic coating to form the second dielectric coating (162, 262).

15. The method (300) of claim 14, further comprising drying (308) the first electrostatic coating before applying the second electrostatic coating (162, 262).
